# EUROPEAN PATENT SPECIFICATION

(11) **EP 0 995 322 B1**
(45) Date of publication and mention of the grant of the patent: **14.04.2004**
(21) Application number: 98902722.2
(22) Date of filing: 23.01.1998
(51) Int. Cl.: H04Q 3/00

(54) **A TELECOMMUNICATIONS MANAGEMENT SYSTEM**
FERNMELDEVERWALTUNGSSYSTEM
SYSTEME DE GESTION DE TELECOMMUNICATIONS

(30) Priority: 30.01.1997 GB 9701971
(43) Date of publication of application: 26.04.2000
(73) Proprietor: Alcatel USA Sourcing, L.P., Plano, Texas 75075-5813 (US)
(72) Inventor: YEUNG, Joemanne, Chi, Cheung, Bedfordshire MK43 9JB (GB)
(74) Representative: Rausch, Gabriele
(86) International application number: PCT/US1998/001497
(87) International publication number: WO 1998/034375

(56) References cited:
- US-A- 5 579 384
- DUPUY ET AL.: "The TINA consortium: Towards networking telecommunications information services" XV INTERNATIONAL SWITCHING SYMPOSIUM, vol. 2, 23 - 28 April 1995, BERLIN DE, pages 207-211, XP000495654
- PATHAK ET AL.: "Intergrated network and service management for the NCIH" IEEE NETWORK: THE MAGAZINE OF COMPUTER COMMUNICATIONS., vol. 8, no. 6, November 1994 - December 1994, NEW YORK US, pages 56-63, XP000480184
- VORUGANTI: "A global network management framework for the '90s" IEEE COMMUNICATIONS MAGAZINE, vol. 32, no. 8, August 1994, NEW YORK US, pages 74-83, XP000471045

## Description

### TECHNICAL FIELD OF THE INVENTION

This invention relates to telecommunications systems and, in particular, to management systems therefor. The invention particularly relates to management systems for wireless telecommunications systems, but its use is not restricted to wireless systems.

### BACKGROUND OF THE INVENTION

A telecommunications system will typically include items of equipment, such as central stations or terminals, for handling communications within the telecommunications network. In a wired telecommunications system, this equipment may typically be located at telephone exchange sites in the telecommunications system. In a wireless telecommunications system, a central station may be included that is connected to the public telephone network and exists to relay messages from subscribers in the cell controlled by the central station to the public telephone network, and vice versa.

Typically, a site controller, or server, is connectable to one or more of the items of equipment for controlling that equipment. However, this arrangement has generally required an operator to be physically present at the site controller in order to manage the equipment. UK Patent application GB-A-2,301,746 alleviates this problem by providing a server that is local to the managed equipment and has a server application installed for controlling the managed equipment, and then enabling a number of client applications, either local or remote, to connect to the local server in order to invoke operations within the server application so as to manage the items of equipment to which the server is connected.

A management communications network is therefore established, which is used to enable client applications to communicate with servers in order to manage equipment controlled by those servers. Through the management communications network, it is possible for a number of client applications to control the same server by sending control messages to that server.

Hence, for example, if a new central terminal is being installed at a particular location, an engineer will typically travel to that location, connect a server to the central terminal, and then run a client application, eg. on a laptop computer, to interface with the server application on the server in order to install the central terminal.

Whilst this is going on, an engineer at a control centre can also use a client application to connect to the server and through the server obtain details about the central terminal being installed. Often, in this scenario, it is useful for the two engineers to communicate with each other to discuss the installation process. However, currently, this requires the engineer at the installation site to have access to a phone or other form of communications equipment in order to hold a conversation with the engineer at the control centre.

In wired telecommunications system, this problem has been alleviated somewhat by the provision of an 'order wire', which provides a dedicated voice line to the exchange, thereby enabling the engineer to communicate with another engineer, for example an engineer at the control centre. The piece of equipment being installed by the engineer will provide the voice frequency input to enable the engineer to connect a phone to the equipment in order to use the order wire line. Currently, there is no equivalent of the order wire within wireless telecommunications systems. Further, the order wire in wired telecommunications systems only enables a one-to-one communication to take place.

Often the central terminals are installed at remote locations where access to a phone is limited. With the increase in the use of mobile phones, this problem is alleviated somewhat, but the engineer may not always be in an area where a good signal for the mobile phone can be obtained. Hence, there is still a need for a more convenient and reliable means for communication between people running different client applications, which provides more flexibility than the order wire approach used in some wired telecommunications systems.

### SUMMARY OF THE INVENTION

Viewed from a first aspect, the present invention provides a server station for managing an item of equipment of a telecommunications system, the server station being responsive to control messages from a client application to perform operations in order to manage the item of equipment, a plurality of client applications being able to send control messages to the server station via a management communications network, the server station comprising: means for accessing a storage arranged to store address information for said plurality of client applications; an interface for receiving a message from a first of said plurality of client applications, and for determining whether the message is a control message for the server or a message destined for a second of said plurality of client applications; and a router, responsive to the interface determining that the message is destined for said second client application, to use the address information for the second client application to re-route the message via said management communications network to said second client application.

In accordance with the present invention, the actual management communications network used by the client applications to manage items of equipment via one or more server stations is also used for the transmission of messages between users of the client applications, the server station being used as a router for these messages. This removes the need for a separate phone connection between users of different client applications to enable those users to communicate with each other. The invention provides improved flexibility over the dedicated one-to-one order wire approach used in wired telecommunications systems of the prior art, since the full management communications network can be used to enable any users of client applications to communicate with each other, and the solution is applicable to both wired and wireless telecommunications systems. In preferred embodiments, the messages are passed as digital data within a predetermined bandwidth of the data channel of the management telecommunications network, thereby avoiding the need for any voice channel to be provided.

The storage used to store address information may be an external database accessible by the server station, or alternatively may be a storage internal to the server station. In preferred embodiments, the storage is internal RAM within the server station.

In preferred embodiments, the server station is arranged to be able to communicate over the management communications network with other server stations used to manage other items of equipment, and the address information for a client application stored in said storage indicates which server station is associated as a default server station for that client application. In such arrangements, if the address information in said storage indicates that the default server station for the second client application is one of the other server stations, then the router is arranged to route the message to the default server station for passing by the default server station to the second application.

Hence, the management communications network enables messages to be passed throughout the telecommunications system, such that messages may be passed between client applications even if those client applications are logged on to different server stations managing different items of equipment.

Preferably, the server station is arranged to receive information over the management communications network identifying if the second client application is logged on to the default server station, and, if not, the router is arranged to store the message in a buffer until information is received indicating that the second client application is logged on to the default server station, at which time the router is arranged to route the message to the default server station. Alternatively, the default server station can be arranged to buffer the message if the second client application is not logged on to the server station at the time that the message is received.

Further, the server station may be arranged to receive information over the management communications network identifying which server station the second client application is logged on to (which may not necessarily be the default server station), and the router is arranged to use that information to route the message to the server station that the second client application is logged on to.

It will be apparent to those skilled in the art that information about the logging on of client applications to particular servers can be disseminated over the management communications network in a number of different ways. For example, the servers can be arranged such that, when a client application logs on to a server, that server broadcasts information to the other servers in the telecommunications system identifying that that client application has logged on to that server. This information can then be stored in the storage. Alternatively, the information can be disseminated as part of a "network directory services", whereby servers are arranged to synchronise with each other. The user of a client application may be asked when logging on to a server whether he/she wishes to synchronise that log on to the other servers in the network.

The interface of the server station may be arranged in a number of different ways to determine whether a received message is a control message for the server or a message destined for another client application. For instance, the interface could be arranged to determine whether the message contains a destination address not corresponding to that of the server station, and from that deduce that the message is destined for another client application, However, in preferred embodiments, the interface is arranged to identify a received message as one of a plurality of message types defined in an interface protocol, a first message type being defined for messages to be re-routed by the router to another of said client applications. Hence, in preferred embodiments, it is the message type which is used by the interface rather than the address information within the message.

Preferably, the first message type comprises a first field for identifying the first client application sending the message, a second field for identifying the second client application to which the message is directed, and a third field for storing message data co be routed to the second client application.

The message, in preferred embodiments this being the message data stored in the third field, could take any, appropriate form. For instance, it could represent speech, which would be replayed through speakers connected co the destination client application. However, in preferred embodiments, the message is a text message displayable on a display screen. As mentioned earlier, this text message data can be transmitted as digital data within a predetermined bandwidth of a data channel of the management telecommunications network.

The item of equipment managed by the server station could be any item of equipment forming part of the telecommunications system, but in preferred embodiments the item of equipment managed by the server station is a central terminal of a wireless telecommunications system.

In preferred embodiments, the server station further comprises an object model representing the item of equipment managed by the server station, the control messages received from said client applications causing operations to be performed on the object model, thereby to manage the item of equipment.

Viewed from a second aspect, the present invention provides a client station for communicating with a server station in accordance with the first aspect of the invention, the client station comprising: a client application for issuing messages to said interface of the server station, the messages being either control messages for the server station or messages destined for a second client application; an input means for enabling a user to interact with the client application to generate the messages to be issued by the client application; and a client interface for sending said messages to the interface of the server station, and for receiving messages sent to the client station.

The client station is hence arranged to transmit and receive via the management communications network messages representing communication with one or more other client applications.

In preferred embodiments, the client station further comprises a display generator for generating display signals to be output to a display screen connectable to the client station, the display generator being arranged to define an area of the display screen in which to display messages received by the client interface originating from other client stations. Preferably, the display generator is arranged to define a further area of the display screen in which to display messages issued by the client application and destined for another client station.

By such an approach, the user can be provided with two windows, one for displaying the text messages sent by the user, and another to display text messages received from users of other client applications. Separate windows could be provided for messages received from different users.

In preferred embodiments, the client application is arranged to issue messages of a first message type comprising a first field for identifying the client application sending the message, a second field for identifying a destination client application to which the message is directed, and a third field for storing the message data. Preferably, the user can specify a plurality of destination client applications to which the message should be sent and the client application is arranged to issue a plurality of messages with identical message content in the third field, one for each of said destination client applications. By this approach, a one-to-many communication can be established.

Viewed from a third aspect, the present invention provides a telecommunications management system comprising at least one server station in accordance with the first aspect of the invention.

Viewed from a fourth aspect, the present invention provides a method of operating a server station for managing an item of equipment of a telecommunications system, the server station being responsive to control messages from a client application to perform operations in order to manage the item of equipment, a plurality of client applications being able to send control messages to the server station via a management communications network, the method comprising the steps of: (a) storing address information for said plurality of client applications in a storage device; (b) receiving a message from a first of said plurality of client applications; (c) determining whether the message received at said step (b) is a control message for the server or a message destined for a second of said plurality of client applications; and (d) in response to the determination at said step (c) indicating that the message is destined for said second client application, using the address information for the second client application to re-route the message via said management communications network to said second client application.

### BRIEF DESCRIPTION OF THE INVENTION

Embodiments of the invention will now be described, by way of example only, with reference to the accompanying drawings in which like reference signs are used for like features and in which:
FIGURE 1 is a schematic overview of an example of a wireless telecommunications system;
Figure 2 is a schematic representation of a customer premises;
Figures 2A and 2B are schematic illustrations of an example of a subscriber terminal of the telecommunications system of Figure 1;
FIGURE 3 is a schematic illustration of an example of a central terminal of the telecommunications system of FIGURE 1;
FIGURE 4 is an illustration of an example of a frequency plan for the telecommunications system of FIGURE 1;
FIGURE 5A illustrates a server which is connected via a data link to a client station;
FIGURE 5B illustrates an example of a suitable hardware configuration for a client station;
FIGURE 6 illustrates the flow of operations between a client station and a server station in response to commands issued by a user, or by equipment in the telecommunications system;
FIGURE 7 illustrates a server station in accordance with preferred embodiments of the present invention;
FIGURE 8 illustrates an example of a management communications network in which a server station in accordance with preferred embodiments of the present invention could be employed; and
FIGURE 9 illustrates the display screen of a client station in accordance with preferred embodiments of the present invention.

### DETAILED DESCRIPTION OF THE INVENTION

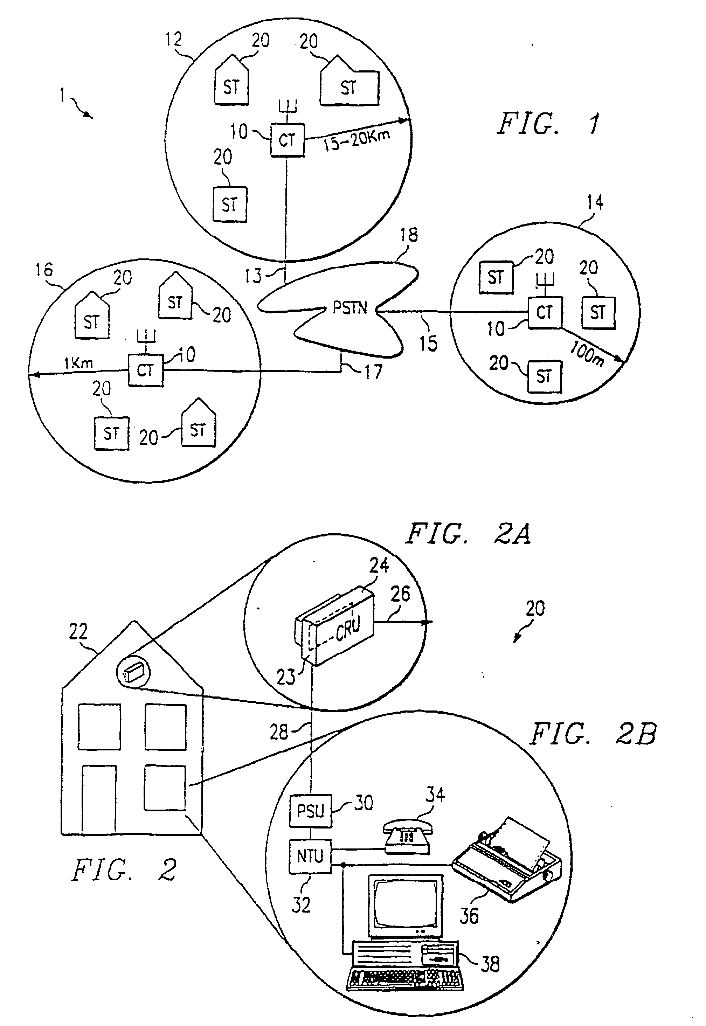

In the preferred embodiments of the present invention, a wireless telecommunications system will be discussed in which a central station is connected to the public telephone network and exists to relay messages from subscribers in the cell controlled by the central station to the public telephone network, and vice versa. An outline of such a wireless telecommunications system will now be provided with reference to FIGURES 1 to 4.

FIGURE 1 is a schematic overview of an example of such a wireless telecommunications system. The telecommunications system includes one or more service areas 12, 14 and 16, each of which is served by a respective central terminal (CT) 10 which establishes a radio link with subscriber terminals (ST) 20 within the area concerned. The area which is covered by a central terminal 10 can vary. For example, in a rural area with a low density of subscribers, a service area 12 could cover an area with a radius of 15-20Km. A service area 14 in an urban environment where there is a high density of subscriber terminals 20 might only cover an area with a radius of the order of 100m. In a suburban area with an intermediate density of subscriber terminals, a service area 16 might cover an area with a radius of the order of 1Km. It will be appreciated that the area covered by a particular central terminal 10 can be chosen to suit the local requirements of expected or actual subscriber density, local geographic considerations, etc, and is not limited to the examples illustrated in FIGURE 1. Moreover, the coverage need not be, and typically will not be circular in extent due to antenna design considerations, geographical factors, buildings and so on, which will affect the distribution of transmitted signals.

The central terminals 10 for respective service areas 12, 14, 16 can be connected to each other by means of links 13, 15 and 17 which interface, for example, with a public switched telephone network (PSTN) 18. The links can include conventional telecommunications technology using copper wires, optical fibres, satellites, microwaves, etc.

The wireless telecommunications system of FIGURE 1 is based on providing fixed radio links between subscriber terminals 20 at fixed locations within a service area (e.g., 12, 14, 16) and the central terminal 10 for that service area. In one embodiment, each subscriber Germinal 20 is provided wich a permanent fixed access link to its central terminal 10. However, in alternative embodiments, demand-based access could be provided, so that the number of subscribers which can be serviced exceeds the number of telecommunications links which can currently be active.

Figure 2 includes a schematic representation of customer premises 22. Figures 2A and 2B illustrate an example of a configuration for a subscriber terminal 20 for the telecommunications system of Figure 1. A customer radio unit (CRU) 24 is mounted on the customer's premises. The customer radio unit 24 includes a flat panel antenna or the like 23. The customer radio unit is mounted at a location on the customer's premises, or on a mast, etc., and in an orientation such that the flat panel antenna 23 within the customer radio unit 24 faces in the direction 26 of the central terminal 10 for the service area in which the customer radio unit 24 is located.

The customer radio unit 24 is connected via a drop line 28 to a power supply unit (PSU) 30 within the customer's premises. The power supply unit 30 is connected to the local power supply for providing power to the customer radio unit 24 and a network terminal unit (NTU) 32. The customer radio unit 24 is also connected via the power supply unit 30 to the network terminal unit 32, which in turn is connected to telecommunications equipment in the customer's premises, for example to one or more telephones 34, facsimile machines 36 and computers 38. The telecommunications equipment is represented as being within a single customer's premises. However, this need not be the case, as the subscriber terminal 20 preferably supports either a single or a dual line, so that two subscriber lines could be supported by a single subscriber terminal 20. The subscriber terminal 20 can also be arranged to support analogue and digital telecommunications, for example analogue communications at 16, 32 or 64kbits/sec or digital communications in accordance with the ISDN BRA standard.

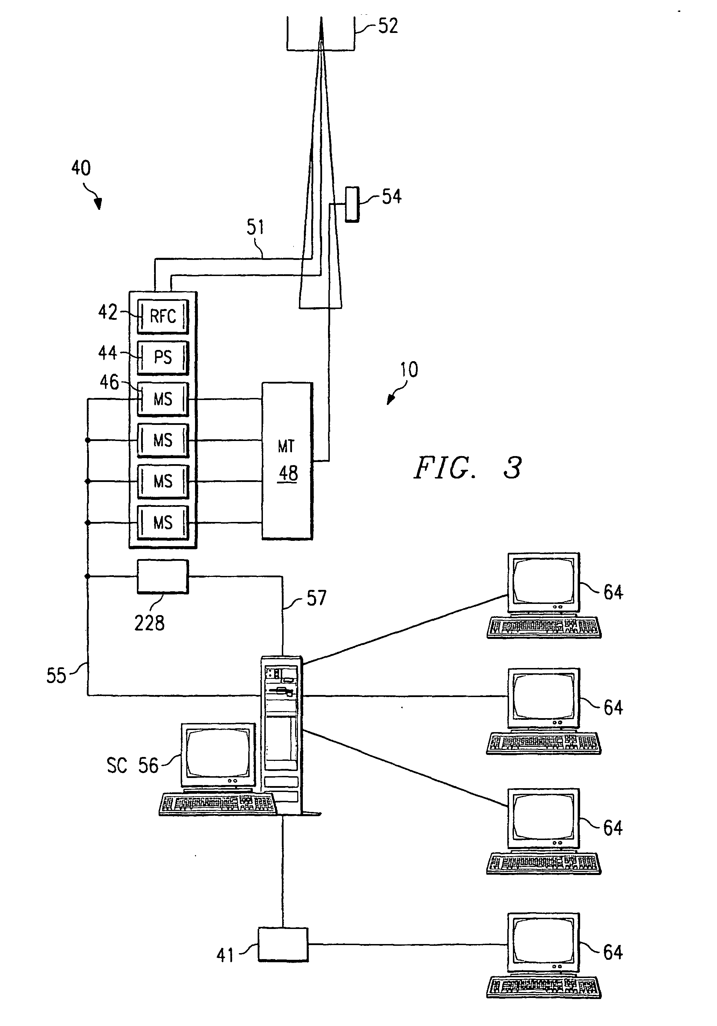

FIGURE 3 is a schematic illustration of an example of a central terminal of the telecommunications system of FIGURE 1. The common equipment rack 40 comprises a number of equipment shelves 42, 44, 46, including a RF Combiner and power amp shelf (RFC) 42, a Power Supply shelf (PS) 44 and a number of (in this example four) Modem Shelves (MS) 46. The RF combiner shelf 42 allows the four modem shelves 46 to operate in parallel. It combines and amplifies the power of four transmit signals, each from a respective one of the four modem shelves, and amplifies and splits received signals four ways so that separate signals may be passed to the respective modem shelves. The power supply shelf 44 provides a connection to the local power supply and fusing for the various components in the common equipment rack 40. A bidirectional connection extends between the RF combiner shelf 42 and the main central terminal antenna 52, typically an omnidirectional antenna, mounted on a central terminal mast 50.

This example of a central terminal 10 is connected via a point-to-point microwave link to a location where an interface to the public switched telephone network 18, shown schematically in FIGURE 1, is made. As mentioned above, other types of connections (e.g., copper wires or optical fibres) can be used to link the central terminal 10 to the public switched telephone network 18. In this example the modem shelves are connected via lines 47 to a microwave terminal (MT) 48. A microwave link 49 extends from the microwave terminal 48 to a point-to-point microwave antenna 54 mounted on the mast 50 for a host connection to the public switched telephone network 18.

The central terminal 10 is connected to and controlled by a server station 56, sometimes referred to as a site controller (SC). The server 56 can be connected to each modem shelf of the central terminal 10 via, for example, RS232 connections 55. The server 56 provides functions such as the localisation of faults, alarms and status and the configuring of the central terminal 10. A server 56 will typically support a single central terminal 10, although a plurality of servers 56 could be networked for supporting a plurality of central terminals 10, and indeed one server may support a plurality of central terminals. The server 56 is typically connectable to a plurality of remote client and remote server stations 64. The connection may be an ethernet link, a PSTN link via a modem 41 or other wireless link.

As an alternative to the RS232 connections 55, which extend to the server 56, data connections such as an X.25 link 57 could instead be provided from a pad 228 to the server 56.

The server 56 can be arranged to maintain an object based control structure (hereafter referred to as an object model) for enabling the control of the wireless telecommunications system. Further, the server (or indeed any server) may be remotely controlled from any remote client station.

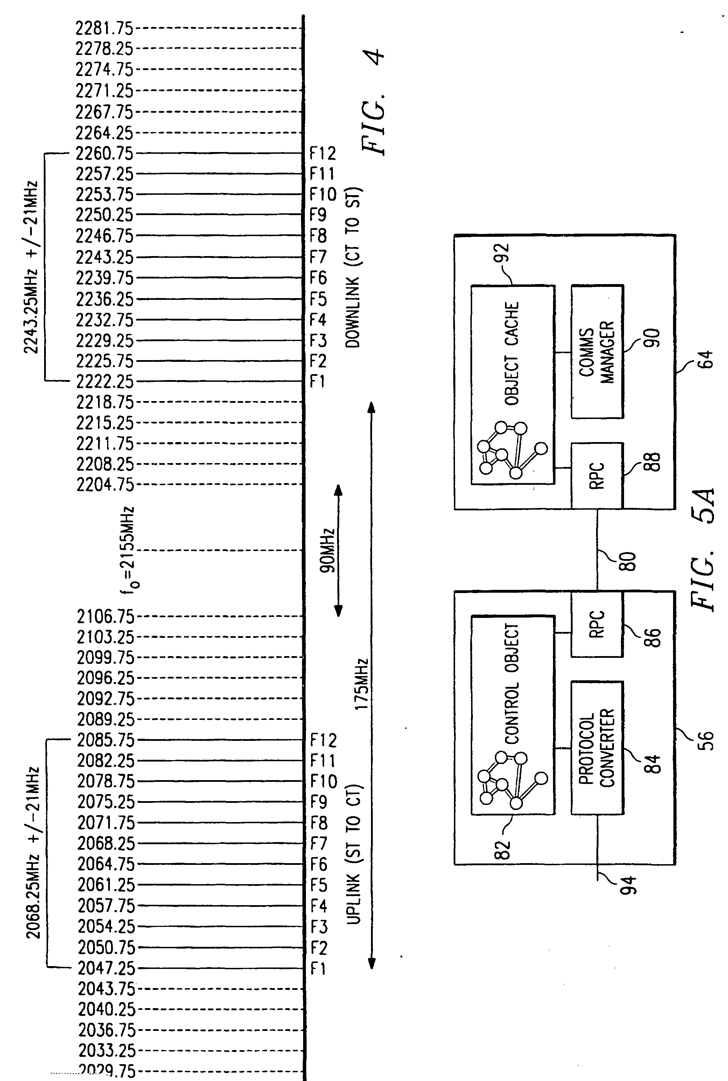

The wireless telecommunications between a central terminal 10 and the subscriber terminals 20 could operate on various frequencies. FIGURE 4 illustrates one possible example of the frequencies which could be used. In the present example, the wireless telecommunication system is intended to operate in the 1.5-2.5GHz Band. In particular the present example is intended to operate in the Band defined by ITU-R (CCIR) Recommendation F.701 (2025-2110MHz, 2200-2290MHz). FIGURE 4 illustrates the frequencies used for the uplink from the subscriber terminals 20 to the central terminal 10 and for the downlink from the central terminal 10 to the subscriber terminals 20. It will be noted that 12 uplink and 12 downlink radio channels of 3.5MHz each are provided centred about 2155MHz. The spacing between the receive and transmit channels exceeds the required minimum spacing of 70MHz.

In the present example, each modem shelf 46 will support 1 frequency channel (i.e. one uplink frequency plus the corresponding downlink frequency), with techniques such as 'Code Division Multiplexed Access' (CDMA) being used to enable a plurality of wireless links to subscriber terminals to be simultaneously supported on each frequency channel.

Typically, the radio traffic from a particular central terminal 10 will extend into the area covered by a neighbouring central terminal 10. To avoid, or at least to reduce interference problems caused by adjoining areas, only a limited number of the available frequencies will be used by any given central terminal 10. This is discussed in more detail in GB-A-2,301,751, which also provides further details on CDMA encoding/decoding, and on the signal processing stages employed in the subscriber terminals and central terminal to manage communications between them.

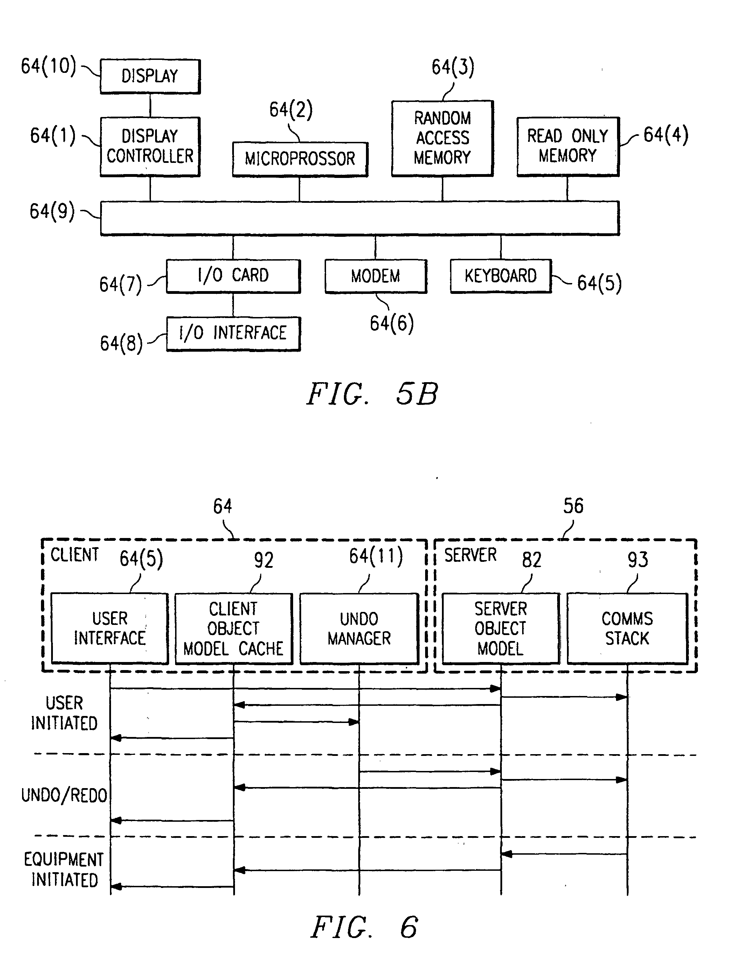

As mentioned earlier, server and client stations can be used to manage the wireless telecommunications system. A summary of how this management may be achieved will now be provided with reference to FIGURES 5 and 6.

Within each modem shelf of the central terminal, a shelf controller is used to manage the operation of the whole of the modem shelf and its daughter network sub-elements (NSEs). The shelf controller (SC) is provided with a RS232 serial port for connection to the server 56 or to the pad 228. The shelf controller communicates control and data information via a backplane asynchronous bus directly with elements of the modem shelf, such as an analogue card (AN), a tributary unit card (TU) and a number of modem cards (MCs). Other network sub-elements are connected via the modem cards.

A protocol, called the Sub-system Management Processor (SMP) protocol, is used for communications between the shelf controller and a server 56, or site controller. This protocol is a balanced protocol with either party to a communication being able to initiate an exchange of information. As mentioned above, the shelf controller 72 is provided with an RS232 serial output for connection to a server 56 or to a pad 228. More details of the shelf controller and of the SMP protocol can be found in UK patent application GB-A-2,301,751, to which the reader is referred for further details.

As mentioned above, the server 56 maintains an object model for control of the telecommunications system. The server and the object model 82 are so designed that control of the server (and hence the telecommunications system) is possible from a remote client station 64. The remote client station 64 may be a computer terminal or may be another server. Advantageously, control of the object model 82, and thus the telecommunications system, is accomplished by way of operations. These operations may be either update or retrieve operations which are applied to the object model to control the telecommunications system.

FIGURE 5A illustrates a server 56 which is connected via a data link 80 to a client station 64. The data link 80 may be any sort of link, either wired or wireless. Within the server 56 there are provided an object model 82, a protocol converter 84 and an RPC (Remote Procedure Call) interface 86. Similarly, within the client station 64, there are provided an object cache 92, a communications manager 90 and an RPC interface 88.

The protocol converter 84 in the server 56 receives SMP messages from the central terminal 10. Also provided, but not shown, is an interface through which the messages from the central terminal 10, via a data link 94, are received. The protocol converter 84 converts the received SMP messages into operations which are then applied to the object model 82 to control the telecommunications system.

The object cache 92 in the client station 64 can be arranged to maintain therein a map of the entire network to which that client station is connected. That map would include a complete copy of the object model 82 maintained in the server 56. However, in alternative embodiments, only a portion of the object model 82 is stored in the object cache in order to reduce the amount of memory required by the client station.

The communications manager 90 and the RPC interfaces 86 & 88 allow the creation and maintenance of reconfigurable dynamic interfaces between the client station 64 and, in this example, the server 56.

A detailed description of the object model 82, the "SMP to operation" conversion process, the reconfigurable dynamic interfaces, and how the object model is used to control the wireless telecommunications system, including the central terminal and the subscriber terminals, is provided in GB-A-2,301,746.

FIGURE 5B illustrates an example of a suitable hardware configuration for a client station 64. With reference to FIGURE 5B, the client station 64 may comprise a display controller 64(1), a microprocessor 64(2), a random access memory 64(3), a read only memory 64(4), a keyboard 64(5), a modem 64(6), an I/O card 64(7), an I/O interface 64(8), a common bus 64(9) and a display 64(10).

The display controller 64(1) controls the display 64(10) and allows the display of information to a user using the client station 64. The display controller 64(1) controls such functions as the display refresh rate and other commonly known functions. The display controller 64(1) is in communication with other components of the client station 64 so that information may be routed from the other components via the common bus 64(9) for display to the user.

The microprocessor 64(2) provides global control of the client station 64 and, as such, provides a means for a user to execute control functions in the client station 64. The random and read only memories 64(3) and 64(4) provide a memory in which the object cache 92, communications manager 90 and remote procedure call interface 88 may be maintained. The memories may also provide storage facilities for other information to be used within the client station 64 and beyond.

The keyboard 64(5) provides a means for a user to input commands to control the functions maintained in the memories. Alternative input devices may also be provided such as a mouse, trackerball or other commonly available devices.

The modem 64(6) provides a means for connecting the client station 64 to a remote server station via a telephone line, for example. Instructions generated by the functions maintained in the memories may be passed to the modem for conversion into a suitable format for broadcast down a telephone line.

The I/O (Input/Output) card 64(7) controls the I/O interface 64(8) and, as such, provides a means for connecting to remote devices by way of a serial or parallel port. Alternative I/O devices may also be provided to enable connection to a remote device via a network, for example. The I/O interface is, for example, a serial or a parallel port.

Whilst the client station 64 may be an ordinary personal computer, the performance of the device may be dramatically improved by providing dedicated read only memories for the object cache, comms manager and remote procedure call interface control functions. Variables used and generated by these functions may then be stored and manipulated by way of the random access memory. Such an arrangement would afford more memory to the processing of instructions and the generation of data.

It will also be understood that the representation of the client station in FIGURE 5B is only a schematic and that many additional or alternative components may be provided if desired.

FIGURE 6 illustrates the flow of operations between the client station 64 and the server station 56 in response to control messages issued by a user, or by equipment in the telecommunications system.

With reference to FIGURE 6, there are illustrated three mechanisms of operation manipulation and generation: "user initiated", "undo/redo" and "equipment initiated". These mechanisms provide a purely exemplary indication of the operating manner of the object based control system and are not to be considered as limiting the operation of the system to the three mechanisms alone. Indeed, it will be understood that a number of other mechanisms will also be provided to control the control system.

The "user initiated" mechanism will now be described. A user at the client station 64 enters commands via the user interface 64(5) (which may be a keyboard or other input device) to control the telecommunications system. These commands are converted into a suitable protocol and passed to the server object model 82 maintained in the server 56. The commands are applied to the server object model 82 and cause changes in that object model. These changes are communicated to a communications stack 93 generated by the protocol converter 84, and from there to the telecommunications system for control thereof. Simultaneously, these changes are preferably communicated and applied to the object model maintained in the client object model cache 92 so that the client object model is in agreement with the server object model. These changes are then communicated to the user interface 64(5) where they cause an update of the user interface 64(5) that communicates to the user that their commands have been executed. The changes are also communicated to an undo manager 64(11) maintained in the client station that manages the reversing of operations within the control system.

In this way, the user is able to invoke control changes in the server object model and the attached telecommunications system and be appraised when those control changes have been made. The user is also provided with the facility to reverse those changes, or to redo those changes if desired via the "undo/redo" mechanism.

The undo/redo mechanism will now be described. As described earlier, immediately prior to the application of an operation to an object, the state of that object is copied to a "before" state of the operation. The state parameters contained in the "after" state of the operation may then be applied to the object so as to effect a change in that object. If a user desires to effect a reversal of a change to an object, the state parameters stored in the before state of the operation are block copied to the after state and applied to the object concerned. Similarly, if a user wished to invoke a repeat application of the operation to the object, the state parameters of the object (which are now identical to the original after state parameter) may be retrieved into the after state of the operation and subsequently reapplied to the object.

FIGURE 6 shows such an "undo/redo" procedure. Issuance of an undo or redo request by a user via the user interface 64(5) results in the application of the appropriate operation to the object model 82 maintained in the remote server 56. Application of that operation to the object model causes a change in that object model and the change is communicated to the object model maintained in the client object model cache 92 so that the object model cache is in agreement with the server object model. The change may also be communicated to the telecommunications system via the comms stack 93 thereby to control the telecommunications system. The changes communicated to the client object model cache 92 would similarly change the object models maintained in that cache and those changes may be communicated to the user via the user interface 64(5) so as to inform the user that the undo/redo instruction has been executed.

In addition to user initiated commands from the client, the telecommunications system will generate messages that are applied to the server object model 82 and effect changes in that object model. Such an occasion is illustrated in the "equipment initiated" mechanism. These messages may be error messages, for example. The changes in the server object model 82 are communicated to the object model in the client object model cache 92 and from there to the user interface to appraise the user of the "equipment initiated" changes to the telecommunications system.

The above description has provided a description of a wireless telecommunications system and the techniques by which a client and server station can be used to manage items of equipment in such a wireless telecommunications system. The manner by which communication between users of different client stations in the wireless telecommunications system can be provided in preferred embodiments of the present invention will now be discussed.

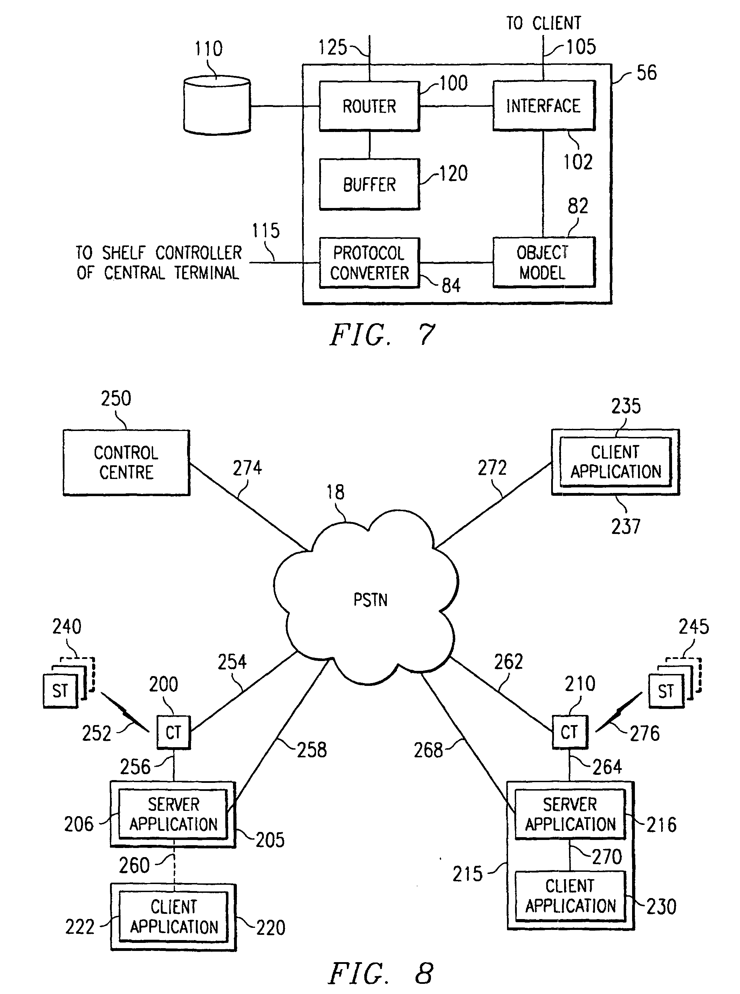

FIGURE 7 is a schematic illustration of the elements provided within a server station 56 in accordance with preferred embodiments of the present invention. As discussed earlier with reference to FIGURE 5A, the protocol converter 84 may receive SMP messages from the shelf controller of the central terminal, and the protocol converter 84 will then convert the received SMP messages into operations to be applied to the object model 82. This enables the wireless telecommunications system to be controlled in the manner described earlier with reference to FIGURES 5 and 6. A user of a client station may also enter commands via the user interface 64(5) illustrated in FIGURE 5B, and those commands can be converted into a message (in preferred embodiments, a message defined in the SMP protocol) and sent to the server 56 over path 105, where the message is received by the interface 102.

The interface 102 is arranged to identify the received message as one of a plurality of message types defined by the SMP protocol. Once the message type has been identified, the interface 102 will pass the message to the object model 82, whereupon appropriate operations are applied to the object model 82 to cause changes in that object model. Any changes are then communicated to a communications stack generated by the protocol converter 84, and from there to the telecommunications system for control thereof.

In accordance with preferred embodiments of the present invention, the SMP protocol has been adapted by the inclusion of an additional message type to identify a message which is to be routed to another client application, rather than a message which provides operations to be applied to the object model 82. In preferred embodiments, this message type has three fields, a first field for identifying the client application sending the message, a second field for identifying the destination client application to which the message is directed, and a third field for storing message data to be routed to the destination client application. If, upon receipt of a message from a client application over path 105, the interface 102 identifies that the message is of this additional message type, then the message is passed to the router 100 rather than to the object model 82.

The server station of the preferred embodiment has access to a storage device 110 which contains address information for the client applications that may be used to manage the wireless telecommunications system. The storage device may be an external database accessible by the server station, or alternatively may be internal storage within the server station, such as internal RAM. In preferred embodiments, the storage device is internal RAM.

The address information can take a number of different forms. For example, when a client logs on to a server station of the wireless telecommunications system, that server station can be arranged to broadcast over the management communications network to other server stations of the wireless telecommunications system the fact that that client is logged on to that server station. Alternatively, this information may be disseminated as network directory services used to keep the servers synchronised with each other. Upon receipt of that information, the server station 56 may store that information as address information within the storage device 110.

Alternatively, or in addition, each client may be assigned a default server station. If the client application is actually installed on a server station of the wireless telecommunications system, then the default server station would generally be selected to be the server station on which the client application was installed. However, the client application may be installed on a computer that is not used as a server station of the wireless telecommunications network, but that client application may still be associated with a default server station, for instance the server station that it first logged on to, or the server station that it statistically logs on to most often. However a default server station is selected for a client application, the information about the address of that default server station can be stored in the storage device 110 as address information for that client application.

In preferred embodiments, the additional message type added to the SMP protocol for messages to be routed via the router 100 to other client stations preferably comprises three fields. The first field will in preferred embodiments identify the client that has issued the message, the second field will identify the destination client to which the message is directed, and the third field will contain the message data to be sent to the destination client. When the router 100 receives a message from the interface 102, then the data in the second field can be used by the router to identify the destination client. This information can then be used to find a particular record in the storage device 110 for that destination client, this record including the address information necessary for the router to correctly route the message.

If the address information in the storage device 110 indicates that the destination client is actually logged on to the server 56, or that the default server is server 56, then the routing procedure is straightforward. If the client is logged on to the server 56, then the router can merely pass the message directly to the destination client over path 125. As will be discussed in more detail later, the connection between a client and a server can take a number of different forms, for example, a modem, an X.25, or an Ethernet connection, and the exact connection method used is not relevant for the purposes of the present invention. If the server 56 is the default server for the destination client, but the destination client is not currently logged on to the server, then the router 100 can be arranged to store the message in the buffer 120 until such time as the destination client does log on to the server 56. Once the client does log on to the server 56, the router 100 will retrieve the message from the buffer 120 and will pass that message over path 125 to the destination client.

If the address information in the storage device 110 indicates that the destination client is currently logged on to another server of the wireless telecommunications system, or that the default server for that client is another server for the wireless telecommunications system, then that other server will be identified in the address information stored in the storage device 110. If the address information indicates that the destination client is currently logged on to a particular server, then the router 100 can pass the message over path 125 to that server, and that server will then take responsibility for routing the message to the destination client that is logged on to it. Servers can contact each other via any appropriate mechanism provided by the management communications network, for example via the public switched telephone network (PSTN), by a separate Ethernet connection, or by X.25 connections.

In the situation where the address information in the storage device indicates a default server station for the destination client, then, in preferred embodiments, the router 100 may be arranged to do one of two things. Firstly, the router 100 may pass the message to the default server station irrespective of whether the destination client is actually logged on to that default server station or not, and the default server station can then take responsibility for managing that message. Typically, the default server station would pass the message directly to the destination client if the destination client were actually logged on to that default server station, or would buffer the message if the destination client were not currently logged on for subsequent transmittal to the destination client when the destination client next logs on to the default server station. Alternatively, if the address information stored in the storage device indicates that the destination client is not currently logged on to the default server station, the router 100 may store the message in the buffer 120 for subsequent transmittal to the default server station when the destination client next logs on to the default server station. As was discussed earlier, in preferred embodiments, each server station can be arranged to broadcast information to the other stations of the wireless telecommunications system concerning which client applications are currently logged on to that server station.

Having discussed the server station of the preferred embodiment with reference to FIGURE 7, an illustration of how messages may be passed via the management communications network between clients will now be provided with reference to FIGURE 8, which provides a schematic illustration of the management communications network. For the sake of simplicity, only two central terminals 200, 210 are shown in FIGURE 8, but it will be appreciated that in a typical wireless telecommunications system, there will be significantly more central terminals. As with the central terminals described with reference to FIGURE 1, central terminal 200 can connect to the public switched telephone network (PSTN) 18 over path 254, and a number of wireless links 252 can be created to enable subscriber terminals 240 to communicate with the central terminal 200. Likewise, central terminal 210 can communicate with the PSTN 18 over path 262, and can communicate with subscriber terminals 245 over wireless links 276.

Central terminal 200 is connected to a server station 205, on which a server application 206 is installed. As discussed earlier with reference to FIGURE 3, the connection 256 between central terminal 200 and the server station 205 may typically be provided by RS232 connections or via an X.25 link. Server application 206 may be controlled remotely over link 260 from a client application 22 installed on a client computer 220. The client computer 220 may be any suitable computer, such as a laptop computer carried by an engineer. As discussed earlier, the connection 260 between the server 205 and the client 220 may be an Ethernet link, a PSTN link via a modem, or another type of wireless link. It can of course also be provided via a wired, as oppose to a wireless, link.

Central terminal 210 is also connected to a server 215 over path 264, the server 215 having a server application 216 installed thereon. In this example, the server station 215 also has a local client application 230 installed which can communicate via an internal link 270 with the server application 216. Hence, it is clear that the client applications used to control the servers may be either local or remote to the servers.

The server stations 205, 215 are able to communicate over the PSTN 18 via links 258 and 268, respectively. These links enable the servers 205, 215 to communicate with each other, and further provide one of the mechanisms by which remote client applications may communicate with those server stations. It will also be appreciated that the servers can contact each other by any other communication path that may be provided, for example an Ethernet or an X.25 connection.

Alternatively, the server stations 205, 215 can communicate via the respective central terminals 200, 210 and paths 254, 262. In preferred embodiments, the paths 254, 262 from the CTs to the PSTN take the form of a 2MB/s thirty channel E1 connection, and one channel of that E1 connection can be used for management communications from the server stations.

FIGURE 8 also shows a client computer 237, on which a client application 235 is installed, which is connected to the PSTN 18 over link 272. Via this link, the client 237 is able to communicate with the servers 205, 215, and hence a user of that client 237 can seek to control the wireless telecommunications system via either of those server stations 205, 215. A control centre 250 is also shown as having a connection 274 to the PSTN 18. The control centre 250 can be thought of as comprising a number of client applications, and enables users at the control centre to manage the wireless telecommunications system by logging on to appropriate servers 205, 215 in the management communications network.

To further illustrate the preferred embodiment of the present invention, a few scenarios where one client wishes to communicate with another client will now be discussed with reference to FIGURE 8. As a first example, consider the situation where central terminal 200 is being installed at a remote location where access to telephone lines is limited. An engineer has travelled to that site with his laptop computer 220, on which a client application 222 installed, in order to configure the central terminal and a local server station 205. As discussed earlier, an object model of the equipment to the managed by the server station 205 will be loaded into the server application 206, and the engineer can interact with that model via the client application 222 on his laptop computer 220. By interacting with the object model on the server station 205, the engineer will be able to configure the central terminal 200, and indeed any subscriber terminals 240 arranged to communicate with that central terminal 200. During this installation procedure, the engineer may wish to discuss issues with another engineer at the control centre 250. Prior to the present invention, this would most likely be done via a telephone connection. However, in some situations, the engineer may not have access to a telephone, or may have a mobile phone but be in an area where the reception is weak or non-existent.

In accordance with preferred embodiments of the present invention, these problems are solved by employing the management communications network as the mechanism for routing communications between the engineer and the control centre 250. As discussed earlier, the engineer can interact with the client application 222 in order to generate messages of a particular message type, which the server station 205 will recognise as messages which are to be routed to another client application, as opposed to messages which include operations to be applied to the object model on the server station 205. In the message generated by the engineer, it will be indicated that the control centre 250 is the desired recipient of the message, and the server 205 will access its address information in order to establish the address of the control centre 250. Once this has been done, the message can be routed, for example via the PSTN 18 over links 258 and 274 to the control centre 250. The control centre 250 will be used to monitor the wireless telecommunications network, and at the client application within the control centre 250 that is monitoring the server station 205, an indication that a message has arrived will be displayed to the user of that client application. As will discussed in more detail later, in preferred embodiments, the message will be displayed in a window of the display screen. The user of the client application at the control centre 250 can then respond to that message, and the message will be routed back via the server station 205 to the client application 222 where it will be displayed to the engineer.

In an alternative arrangement, a user of the client computer 237 may connect via the PSTN 18 over links 272 and 268 to the server application 216 of the server station 215. Via this remote link, the user of the client station 237 may wish to alter the object model of the server application 216 in order to alter the configuration of the central terminal 210 or the subscriber terminals 245. However, sometimes this may require some hardware on the central terminal 210 to be removed or replaced. In the current example, there is a local client application 230 which is used to monitor the central terminal 210 via the server application 216. Hence, the engineer monitoring the central terminal 210 via the client application 230 is likely to be within a reasonably close proximity to the central terminal 210, and hence could perform any hardware alterations that were required. However, as previously discussed, in the past communication between these two engineers would only be possible if there were a suitable separate communication medium in place, such as a wired telephone connection. However, in accordance with the preferred embodiments of the present invention, the user of the client application 235 is able to route a message to the user of the client application 230 via the management communications network and the server application 216, and the engineer at the client application 230 can then take any action necessary as a result of that message, and subsequently reply to the engineer of the client application 235 to confirm that the action has been completed.

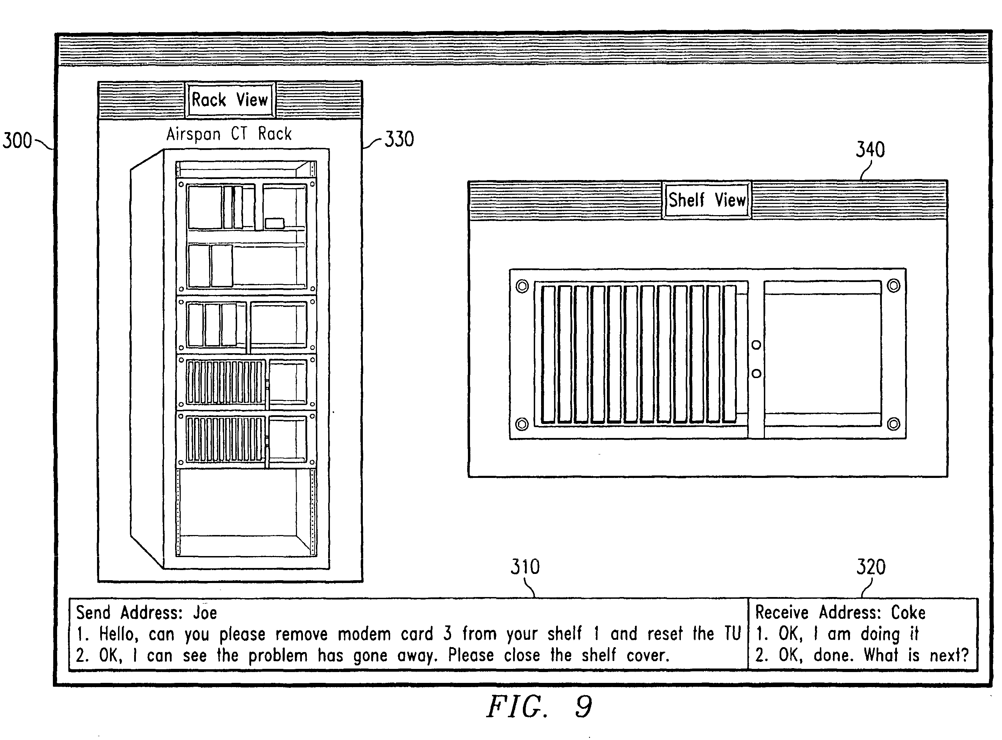

Having discussed the above examples, an illustration of the display screen that may be provided at the client will now be discussed with reference to FIGURE 9. Within the display area 300, the user will typically be provided with a number of views of the telecommunications equipment being managed via the client application. For example, the user may be presented with a rack view 330 showing the various shelves of equipment included in the central terminal, and may also be provided with a enlarged view 340 of a particular shelf of equipment within the central terminal.

Under a 'menu' option, the user can activate a background communication channel, and the user will then preferably be prompted to select an ID for a destination client application to which the user wishes to send a message. Once the sender and destination client IDs are selected (the sender ID will default to the current client application), the screen layout is re-scaled so that a lower portion of the screen is arranged to display text windows. In accordance with preferred embodiments of the present invention, the lower portion of the screen has two windows provided therein, a first window 310 being used to show the messages that the user has sent to other client applications, and a second window 320 being used to display the responses to those messages. Preferably, each message will be sequenced with a number starting from '1' and ending when the communication session is closed. Further, the communication session would in preferred embodiments include an option for capturing the text sent and received, whereby the text could be archived. Preferably, the file format used would be 'Rich Text Format'.

It is possible that the user may wish to send the same message to a number of different client applications, in which case a number of second windows 320 can be displayed, one for each of the client applications from which responses have been received. To send the same message to a number of different client applications, thereby invoking a one-to-many or conference communication, the user can enter the message data and identify a number of recipient client applications for that message data. The client application will then generate a plurality of messages, one for each recipient, each message containing the same message data. The server station will recognise these messages as being of the type to be passed to the router 100, and the router will then dispatch the messages to the various client applications using the address information in the storage device 110.

With reference to FIGURE 9, you can see that the engineer "Joe" has sent a message to another engineer "Coke", asking "Coke" to remove a modem card from one of the CT shelves, and to then reset the tributary unit (TU). "Coke" has then sent a message back to "Joe" telling him that this work is in progress, and subsequently sends another message saying that the work had been completed. "Joe" has then sent another message to "Coke" indicating that the shelf view 340 on the display screen 300 has altered to show that the problem has gone away, and hence that there is no further work to be done.

From the above description, it will be seen that by using the actual management communications network as a mechanism for transmitting messages between users of different client applications, a very efficient and reliable mechanism is provided for those users to communicate with each other. The problems of relying on a separate communications medium, such as a telephone, are alleviated, and the mechanism provided in preferred embodiments also has the flexibility to enable one-to-many communications to take place if required. Further, the solution is applicable to both wired and wireless telecommunications systems, and in preferred embodiments, the messages are passed as digital data within a predetermined bandwidth of the data channel of the management telecommunications network, thereby providing a very cheap and efficient mechanism by which users can communicate with each other.

Although particular embodiments has been described herein, it will be appreciated that the present invention is not limited thereto and that many modifications and additions may be made within the scope of the invention and the attached claims.

## Claims

1. A server station for managing an item of equipment of a telecommunications system, the server station being responsive to control messages from a client application to perform operations in order to manage the item of equipment, a plurality of client applications being able to send control messages to the server station via a management communications network, the server station comprising:
means for accessing a storage (110) arranged to store address information for said plurality of client applications;
an interface (102) for receiving a message from a first of said plurality of client applications, and for determining whether the message is a control message for the server or a message destined for a second of said plurality of client applications; and
a router (100), responsive to the interface (102) determining that the message is destined for said second client application, to use the address information for the second client application to re-route the message via said management communications network to said second client application.

2. A server station as claimed in Claim 1, wherein the server station is arranged to be able to communicate over the management communications network with other server stations used to manage other items of equipment, and the address information for a client application stored in said storage (110) indicates which server station is associated as a default server station for that client application.

3. A server station as claimed in Claim 2, wherein if the address information in said storage (110) indicates that the default server station for the second client application is one of the other server stations, then the router (100) is arranged to route the message to the default server station for passing by the default server station to the second application.

4. A server station as claimed in Claim 3, wherein the server station is arranged to receive information over the management communications network identifying if the second client application is logged on to the default server station, and, if not, the router (100) is arranged to store the message in a buffer (120) until information is received indicating that the second client application is logged on to the default server station, at which time the router is arranged to route the message to the default server station.

5. A server station as claimed in Claim 3, wherein the default server station is arranged to buffer the message if the second client application is not logged on to the server station at the time that the message is received.

6. A server station as claimed in any preceding claim, wherein the server station is arranged to be able to communicate over the management communications network with other server stations used to manage other items of equipment, the server station being arranged to receive information over the management communications network identifying which server station the second client application is logged on to, and the router (100) is arranged to use that information to route the message to the server station that the second client application is logged on to.

7. A server station as claimed in any preceding claim, wherein the interface (102) is arranged to identify a received message as one of a plurality of message types defined in an interface protocol, a first message type being defined for messages to be re-routed by the router (100) to another of said client applications.

8. A server station as claimed in Claim 7, wherein the first message type comprises a first field for identifying the first client application sending the message, a second field for identifying the second client application to which the message is directed, and a third field for storing message data to be routed to the second client application.

9. A server station as claimed in any preceding claim, wherein the message is a text message displayable on a display screen.

10. A server station as claimed in any preceding claim, wherein the router (100) is arranged to transmit the message as digital data within a predetermined bandwidth of the management communications network.

11. A server station as claimed in any preceding claim, wherein said item of equipment managed by the server station is a central terminal (10) of a wireless telecommunications system.

12. A server station as claimed in any preceding claim, further comprising an object model (82) representing the item of equipment managed by the server station, the control messages received from said client applications causing operations to be performed on the object model, thereby to manage the item of equipment.

13. A client station for communicating with a server station as claimed in any preceding claim, the client station comprising:
a client application (222, 230, 235) for issuing messages to said interface (102) of the server station, the messages being either control messages for the server station or messages destined for a second client application;
an input means for enabling a user to interact with the client application to generate the messages to be issued by the client application; and
a client interface for sending said messages to the interface of the server station, and for receiving messages sent to the client station.

14. A client station as claimed in Claim 13, further comprising a display generator for generating display signals to be output to a display screen connectable to the client station, the display generator being arranged to define an area (320) of the display screen in which to display messages received by the client interface originating from other client stations.

15. A client station as claimed in Claim 14, wherein the display generator is arranged to define a further area (310) of the display screen in which to display messages issued by the client application and destined for another client station.

16. A client station as claimed in any of claims 13 to 15, wherein the client application is arranged to issue messages of a first message type comprising a first field for identifying the client application sending the message, a second field for identifying a destination client application to which the message is directed, and a third field for storing the message data.

17. A client station as claimed in Claim 16, wherein the user can specify a plurality of destination client applications to which the message should be sent and the client application is arranged to issue a plurality of messages with identical message content in the third field, one for each of said destination client applications, whereby a one-to-many communication can be established.

18. A telecommunications management system comprising at least one server station as claimed in any of claims 1 to 12.

19. A method of operating a server station for managing an item of equipment of a telecommunications system, the server station being responsive to control messages from a client application to perform operations in order to manage the item of equipment, a plurality of client applications being able to send control messages to the server station via a management communications network, the method comprising the steps of:
(a) storing address information for said plurality of client applications in a storage device (110);
(b) receiving a message from a first of said plurality of client applications;
(c) determining whether the message received at said step (b) is a control message for the server or a message destined for a second of said plurality of client applications; and
(d) in response to the determination at said step (c) indicating that the message is destined for said second client application, using the address information for the second client application to re-route the message via said management communications network to said second client application.

## Patentansprüche

1. Eine Server-Station zur Verwaltung einer Einrichtung eines Telekommunikationssystems, wobei die Server-Station auf Steuernachrichten von einer Client-Applikation reagiert, um Operationen auszuführen, um die Einrichtung zu verwalten, wobei eine Vielzahl von Client-Applikationen in der Lage ist, über ein Verwaltungs-Kommunikationsnetz Steuernachrichten zur Server-Station zu senden, wobei die Server-Station Folgendes umfasst:
Mittel für den Zugriff auf einen Speicher (110), der zur Speicherung von Adressinformation für die Vielzahl von Client-Applikationen eingerichtet ist;
Eine Schnittstelle (102) zum Empfang einer Nachricht von einer ersten der Client-Applikationen und zur Ermittlung, ob die Nachricht eine Steuernachricht für den Server oder eine Nachricht ist, die an eine zweite aus der Vielzahl der Client-Applikationen gerichtet ist; und
Einen Router (100), der auf die Schnittstelle (102) reagiert, die ermittelt, dass die Nachricht an die zweite Client-Applikation gerichtet ist, um die Adressinformation für die zweite Client-Applikation dafür zu verwenden, die Nachricht über das Verwaltungs-Kommunikationsnetz an die zweite Client-Applikation weiterzuleiten.

2. Eine Server-Station, wie in Anspruch 1 beansprucht, worin die Server-Station so eingerichtet ist, dass sie in der Lage ist, über das Verwaltungs-Kommunikationsnetz mit anderen Server-Stationen, die zur Verwaltung anderer Einrichtungen verwendet werden, zu kommunizieren, und worin die Adressinformation für eine Client-Applikation, die in dem Speicher (110) gespeichert ist, anzeigt, welche Server-Station dieser Client-Applikation als voreingestellte Server-Station zugeordnet ist.

3. Eine Server-Station, wie in Anspruch 2 beansprucht, worin, wenn die Adressinformation in dem Speicher (110) anzeigt, dass die voreingestellte Server-Station für die zweite Client-Applikation eine der anderen Server-Stationen ist, der Router (100) so eingerichtet wird, dass er die Nachricht an die voreingestellte Server-Station weiterleitet, um sie durch die voreingestellte Server-Station an die zweite Applikation weiterzugeben.

4. Eine Server-Station, wie in Anspruch 3 beansprucht, worin die Server-Station so eingerichtet ist, dass Informationen über das Verwaltungs-Kommunikationsnetz empfangen werden, die anzeigen, ob die zweite Client-Applikation an der voreingestellten Server-Station angemeldet ist, und, falls nicht, der Router (100) so eingerichtet wird, dass die Nachricht in einem Puffer (120) gespeichert wird, bis die Information empfangen wird, die anzeigt, dass die zweite Client-Applikation an der voreingestellten Server-Station angemeldet ist, und an diesem Zeitpunkt der Router so eingerichtet wird, die Nachricht zur voreingestellten Server-Station weiterzuleiten.

5. Eine Server-Station, wie in Anspruch 3 beansprucht, worin die voreingestellte Server-Station so eingerichtet ist, die Nachricht zu speichern, wenn zu dem Zeitpunkt, zu dem die Nachricht empfangen wird, die zweite Client-Applikation nicht an der Server-Station angemeldet ist.

6. Eine Server-Station, wie in einem beliebigen der obigen Ansprüche beansprucht, worin die Server-Station so eingerichtet ist, dass sie in der Lage ist, mit anderen Server-Stationen, die zur Verwaltung anderer Einrichtungen verwendet werden, über das Verwaltungs-Kommunikationsnetz zu kommunizieren, wobei die Server-Station so eingerichtet wird, Informationen über das Verwaltungs-Kommunikationsnetz zu empfangen, die kennzeichnen, an welcher Server-Station die zweite Client-Applikation angemeldet ist, und der Router (100) so eingerichtet wird, dass er diese Information dazu benutzt, die Nachricht zur Server-Station zu leiten, an der die zweite Client-Applikation angemeldet ist.

7. Eine Server-Station, wie in einem beliebigen der obigen Ansprüche beansprucht, worin die Schnittstelle (102) so eingerichtet ist, eine empfangene Nachricht als eine aus einer Vielzahl von Nachrichtentypen zu erkennen, die in einem Schnittstellenprotokoll definiert sind, wobei ein ersten Nachrichtentyp für Nachrichten definiert ist, die von dem Router (100) an eine andere der Client-Applikationen weiterzuleiten ist.

8. Eine Server-Station, wie in Anspruch 7 beansprucht, worin der erste Nachrichtentyp ein erstes Feld zur Kennzeichnung der ersten Client-Applikation umfasst, welche die Nachricht sendet, ein zweites Feld zur Kennzeichnung der zweiten Client-Applikation, an welche die Nachricht gerichtet ist, und ein drittes Feld zur Speicherung von Nachrichtendaten, die an die zweite Client-Applikation zu leiten sind.

9. Eine Server-Station, wie in einem beliebigen der obigen Ansprüche beansprucht, worin die Nachricht eine Textnachricht ist, die auf einem Anzeige-Bildschirm angezeigt werden kann.

10. Eine Server-Station, wie in einem beliebigen der obigen Ansprüche beansprucht, worin der Router (100) so eingerichtet ist, die Nachricht als digitale Daten innerhalb einer vorher festgelegten Bandbreite des Verwaltungs-Kommunikationsnetzes zu senden.

11. Eine Server-Station, wie in einem beliebigen der obigen Ansprüche beansprucht, worin die von der Server-Station verwaltete Einrichtung eine zentrale Endeinrichtung (10) eines drahtlosen Telekommunikationssystems ist.

12. Eine Server-Station, wie in einem beliebigen der obigen Ansprüche beansprucht, die weiterhin ein Objektmodell (82) enthält, das die von der Server-Station verwaltete Einrichtung repräsentiert, wobei die von den Client-Applikationen empfangenen Steuernachrichten bewirken, dass Operationen auf dem Objektmodell ausgeführt werden, um dadurch die Einrichtung zu verwalten.

13. Eine Client-Station zur Kommunikation mit einer Server-Station, wie in einem beliebigen der obigen Ansprüche beansprucht, wobei die Client-Station folgendes umfasst:
Eine Client-Applikation (222, 230, 235) zur Ausgabe von Nachrichten an die Schnittstelle (102) der Server-Station, wobei die Nachrichten entweder Steuernachrichten für die Server-Station oder Nachrichten sind, die an eine zweite Client-Applikation gerichtet sind;
Ein Eingabe-Mittel, um es einem Benutzer zu ermöglichen, mit der Client-Applikation zu interagieren, um die Nachrichten zu erzeugen, die von der Client-Applikation auszugeben sind; und
Eine Client-Schnittstelle zum Senden der Nachrichten an die Schnittstelle der Server-Station und zum Empfangen von Nachrichten, die an die Client-Station gesendet wurden.

14. Eine Client-Station, wie in Anspruch 13 beansprucht, die weiterhin einen Anzeige-Generator zur Erzeugung von Anzeige-Signalen enthält, die auf einem Anzeige-Bildschirm auszugeben sind, der an die Client-Station angeschlossen werden kann, wobei der Anzeige-Generator so eingerichtet ist, einen Bereich (320) des Anzeige-Bildschirms zu definieren, in dem Nachrichten anzuzeigen sind, die von der Client-Schnittstelle empfangen wurden und von den anderen Client-Stationen kommen.

15. Eine Client-Station, wie in Anspruch 14 beansprucht, worin der Anzeige-Generator so eingerichtet ist, dass ein weiterer Bereich (310) des Anzeige-Bildschirms definiert wird, in dem Nachrichten anzuzeigen sind, die von der Client-Applikation ausgegeben wurden und an eine andere Client-Station gerichtet sind.

16. Eine Client-Station, wie in einem beliebigen der Ansprüche 13 bis 15 beansprucht, worin die Client-Applikation so eingerichtet ist, dass Nachrichten eines ersten Nachrichtentyps ausgesendet werden, der ein erstes Feld zur Kennzeichnung der Client-Applikation enthält, welche die Nachricht sendet, ein zweites Feld zur Kennzeichnung einer Ziel-Client-Applikation, an welche die Nachricht gerichtet ist, und ein drittes Feld zur Speicherung der Nachrichtendaten.

17. Eine Client-Station, wie in Anspruch 16 beansprucht, worin der Benutzer eine Vielzahl von Ziel-Client-Applikationen angeben kann, an welche die Nachricht gesendet werden soll, und die Client-Applikation so eingerichtet ist, dass eine Vielzahl von Nachrichten mit identischem Nachrichteninhalt im dritten Feld ausgesendet wird, eine für jede der Ziel-Client-Applikationen, wodurch eine Punkt-zu-Mehrpunkt-Kommunikation aufgebaut werden kann.

18. Ein Telekommunikations-Verwaltungssystem, das mindestens eine Server-Station enthält, wie in einem beliebigen der Ansprüche 1 bis 12 beansprucht.

19. Ein Verfahren zum Betrieb einer Server-Station zur Verwaltung einer Einrichtung eines Telekommunikationssystems, wobei die Server-Station auf Steuernachrichten von einer Client-Applikation reagiert, um Operationen auszuführen, um die Einrichtung zu verwalten, wobei eine Vielzahl von Client-Applikationen in der Lage ist, Steuernachrichten über ein Verwaltungs-Kommunikationsnetz zur Server-Station zu senden, wobei das Verfahren folgende Schritte umfasst:
(a) Speichern von Adressinformation für die Vielzahl von Client-Applikationen in einer Speichereinrichtung (110);
(b) Empfang von Nachrichten von einer ersten aus der Vielzahl von Client-Applikationen;
(c) Ermittlung, ob die in Schritt (b) empfangene Nachricht eine Steuernachricht für den Server ist oder eine Nachricht, die an eine zweite aus der Vielzahl der Client-Applikationen gerichtet ist; und
(d) Als Reaktion auf die Feststellung in Schritt (c) die Anzeige, dass die Nachricht an die zweite Client-Applikation gerichtet ist, wobei die Adressinformation für die zweite Client-Applikation dazu verwendet wird, die Nachricht über das Verwaltungs-Kommunikationsnetz zur zweiten Client-Applikation weiterzuleiten.

## Revendications

1. Station serveur pour gérer une unité d'équipements d'un système de télécommunications, la station serveur étant sensible à des messages de commande provenant d'une application client pour effectuer des opération de manière à gérer l'unité d'équipements, une pluralité d'applications client étant en mesure d'envoyer des messages de commande à la station serveur via un réseau de communication de gestion, la station serveur comprenant :
des moyens pour accéder à une mémoire (110) agencée pour mémoriser une information d'adresse pour ladite pluralité d'applications client ;
une interface (102) pour recevoir un message provenant d'une première de ladite pluralité d'applications client et pour déterminer si le message est un message de commande pour le serveur ou un message destiné à une deuxième de ladite pluralité d'applications client ; et
un routeur (100), sensible à l'interface (102), déterminant que le message est destiné à ladite deuxième application client, pour utiliser l'information d'adresse pour la deuxième application client pour réacheminer le message via ledit réseau de communication de gestion à ladite deuxième application client.

2. Station serveur selon la revendication 1, dans laquelle la station serveur est agencée pour être capable de communiquer sur le réseau de communication de gestion avec d'autres stations serveur utilisées pour gérer d'autres unités d'équipements et l'information d'adresse pour une application client mémorisée dans ladite mémoire (110) indique quelle station serveur est associée en tant que station serveur par défaut pour cette application client.

3. Station serveur selon la revendication 2, dans laquelle, si l'information d'adresse dans ladite mémoire (110) indique que la station serveur par défaut pour la deuxième application client est une des autres stations serveur, alors le routeur (100) est agencé pour acheminer le message à la station serveur par défaut pour passer par la station serveur par défaut pour la deuxième application.

4. Station serveur selon la revendication 3, dans laquelle la station serveur est agencée pour recevoir sur le réseau de communication de gestion une information identifiant si la deuxième application client est ouverte sur la station serveur par défaut et, sinon, le routeur (100) est agencé pour mémoriser le message dans une mémoire tampon (120) jusqu'à ce qu'une information soit reçue indiquant que la deuxième application client est ouverte sur la station serveur par défaut, moment auquel le routeur est agencé pour acheminer le message à la station serveur par défaut.

5. Station serveur selon la revendication 3, dans laquelle la station serveur par défaut est agencée pour mettre en mémoire tampon le message si la deuxième application client n'est pas ouverte sur la deuxième station serveur au moment où le message est reçu.

6. Station serveur selon l'une quelconque des revendications précédentes, dans laquelle la station serveur est agencée pour être capable de communiquer sur le réseau de communication de gestion avec d'autres stations serveur utilisées pour gérer d'autres unités d'équipements, la station serveur étant agencée pour recevoir sur le réseau de communication de gestion une information identifiant sur quelle station serveur la deuxième application client est ouverte, et le routeur (100) est agencé pour utiliser cette information pour acheminer le message vers la station serveur sur laquelle la deuxième application client est ouverte.

7. Station serveur selon l'une quelconque des revendications précédentes, dans laquelle l'interface (102) est agencée pour identifier un message reçu comme l'un d'une pluralité de types de messages définis dans un protocole d'interface, un premier type de message étant défini pour des messages destinés à être réacheminés par le routeur (100) vers une autre desdites applications client.

8. Station serveur selon la revendication 7, dans laquelle le premier type de message comprend un premier champ pour identifier la première application client envoyant le message, un deuxième champ pour identifier la deuxième application client à laquelle le message est adressée et un troisième champ pour mémoriser des données de message destinées à être acheminées à la deuxième application client.

9. Station serveur selon l'une quelconque des revendications précédentes, dans laquelle le message est un message de texte affichable sur un écran d'affichage.

10. Station serveur selon l'une quelconque des revendications précédentes, dans laquelle le routeur (100) est agencé pour transmettre le message comme données numériques dans une largeur de bande prédéterminée du réseau de communication de gestion.

11. Station serveur selon l'une quelconque des revendications précédentes, dans laquelle ladite unité d'équipements gérée par la station serveur est une station centrale (10) d'un système de communication sans fil.

12. Station serveur selon l'une quelconque des revendications précédentes, comprenant en outre un modèle objet (82) représentant l'unité d'équipements gérée par la station serveur, les messages de commande reçus à partir desdites applications client forçant des opérations à être exécutées sur le modèle objet, pour gérer ainsi l'unité d'équipements.

13. Station client pour communiquer avec une station serveur selon l'une quelconque des revendications précédentes, la station client comprenant :
une application client (222, 230, 235) pour émettre des messages pour ladite interface (102) de la station serveur, les messages étant des messages de commande pour la station serveur ou des messages destinés à une deuxième application client ;
un moyen d'entrée pour permettre à un utilisateur d'interagir avec l'application client pour générer les messages destinés à être émis par l'application client ; et
une interface client pour envoyer lesdits messages à l'interface de la station serveur et pour recevoir des messages envoyés à la station client.

14. Station client selon la revendication 13, comprenant en outre un générateur d'affichage pour générer des signaux d'affichage à transmettre en sortie sur un écran d'affichage pouvant être connecté à la station client, le générateur d'affichage étant agencé pour définir une zone (320) de l'écran d'affichage dans laquelle afficher des messages reçus par l'interface client provenant d'autres stations client.

15. Station client selon la revendication 14, dans laquelle le générateur d'affichage est agencé pour définir une autre zone (310) de l'écran d'affichage dans laquelle afficher des messages émis par l'application client et destinés à une autre station client.

16. Station client selon l'une quelconque des revendications 13 à 15, dans laquelle l'application client est agencée pour émettre des messages d'un premier type de message comprenant un premier champ pour identifier la première application client envoyant le message, un deuxième champ pour identifier une deuxième application client à laquelle le message est adressée et un troisième champ pour mémoriser les données de message.

17. Station client selon la revendication 16, dans laquelle l'utilisateur peut spécifier une pluralité d'applications client de destination auxquelles le message devrait être envoyé et l'application client est agencée pour émettre une pluralité de messages avec un contenu de message identique dans le troisième champ, un pour chacune desdites applications client de destination, moyennant quoi une communication un vers plusieurs peut être établie.

18. Système de gestion de télécommunications comprenant au moins une station serveur selon l'une quelconque des revendication 1 à 12.

19. Procédé pour faire fonctionner une station serveur pour gérer une unité d'équipements d'un système de télécommunications, la station serveur étant sensible à des messages de commande provenant d'une application client pour effectuer des opérations de manière à gérer l'unité d'équipements, une pluralité d'applications client étant en mesure d'envoyer des messages de commande à la station serveur via un réseau de communication de gestion, le procédé comprenant les étapes consistant à :
(a) mémoriser des informations d'adresse pour ladite pluralité d'applications client dans un dispositif de stockage (110) ;
(b) recevoir un message provenant d'une première de ladite pluralité d'applications client ;
(c) déterminer si le message reçu dans ladite étape (b) est un message de commande pour le serveur ou un message destiné à une deuxième de ladite pluralité d'applications client ; et
(d) en réponse à la détermination dans ladite étape (c) indiquant que le message est destiné à ladite deuxième application client, utiliser l'information d'adresse pour la deuxième application client pour réacheminer le message via ledit réseau de communication de gestion à ladite deuxième application client.
